# EUROPEAN PATENT APPLICATION

(11) **EP 2 281 628 A2**
(43) Date of publication of application: **09.02.2011**
(21) Application number: 10251392.6
(22) Date of filing: 04.08.2010
(51) Int. Cl.: B01J 23/42, B01J 23/44, B01J 23/46, B01J 23/50, B01J 23/52, B01J 23/648, B01J 23/652, B01J 23/847, B01J 23/888, B01J 35/00, B01J 37/02, B01J 37/34

(54) **Method for producing noble metal-supported photocatalyst particles**

(30) Priority: 07.08.2009 JP 2009185192
(71) Applicant: Sumitomo Chemical Company, Limited, Tokyo 104-8260 (JP); National University Corporation Hokkaido University, Sapporo-shi, Hokkaido 060-0808 (JP)
(72) Inventor: Abe, Ryu, Sapporo-shi Hokkaido 001-0021 (JP); Kanome, Naoko, Sapporo-shi Hokkaido 001-0021 (JP); Sogabe, Kohei, Niihama-shi Ehime 792-0009 (JP); Sakatani, Yoshiaki, Niihama-shi Ehime 792-0025 (JP)
(74) Representative: Duckworth, Timothy John

(57) **Abstract**

A method for producing a photocatalytic, which can produce a photocatalyst showing high photocatalytic activity, is provided.

The present invention relates to a method for producing noble metal-supported photocatalyst particles wherein a noble metal is supported on the surface of the photocatalyst particles, and a method for producing a dispersion of the noble metal-supported photocatalyst particles, the methods comprising steps of: blowing an inert gas into a raw dispersion in which the photocatalyst particles are dispersed and a precursor of the noble metal is dissolved in a dispersion medium; and irradiating the raw dispersion with light having energy larger than that of a bandgap of the photocatalyst particles, thereby supporting the noble metal on the surface of the photocatalyst particles.

## Description

### BACKGROUND OF THE INVENTION

### Field of the Invention

The present invention relates to a method for producing noble metal-supported photocatalyst particles (or noble metal-supported photocatalyst body particles) showing high photocatalytic activity, and a dispersion of the noble metal-supported photocatalyst particles obtained by the method.

### Description of the Related Art

When a semiconductor is irradiated with light having energy larger than that of a bandgap thereof, electrons in a valence band are excited to a conduction band. As a result, holes are generated in the valence band and electrons are excited to the conduction band. Since such holes and electrons have a strong oxidizing power and a strong reducing power, respectively, they exhibit an oxidation-reduction reaction for a substance in contact with the semiconductor. This oxidation-reduction reaction is referred to as a photocatalytic activity, and such a semiconductor capable of showing such a photocatalytic activity is referred to as a photocatalyst.

As such a photocatalyst, tungsten oxide and titanium oxide are used previously. In particular, tungsten oxide is known as a photocatalyst which can develop a satisfactory photocatalytic activity even under light such as fluorescent light most of which is visible light. In addition, as a measure to further enhance the photocatalytic activity of photocatalyst such as tungsten oxide and titanium oxide, support of a noble metal such as platinum on these photocatalyst has been studied in recent years. Reported is, for example, so-called "photoelectrodeposition method" (Solar Energy Materials and Solar Cells, 51(1998), 203-219) in which a particulate photocatalyst is dispersed and a precursor of a noble metal is dissolved in a dispersion medium, and the resulting dispersion is then irradiated with a high intensity of an ultraviolet light, thereby reducing the precursor of a noble metal to convert to the noble metal. By removing the dispersion medium from the dispersion after the ultraviolet light irradiation, it is possible to obtain noble metal-supported photocatalyst particles as a solid content.

When the noble metal-supported photocatalyst particles are industrially produced using the above conventional method, however, the efficiency of the photoelectrodeposition was poor and the noble metal-supported photocatalyst particles showing a sufficient activity could not be obtained. This is because strong ultraviolet light is irradiated in a step of reducing a precursor of a noble metal but the irradiation is carried out in ambient atmosphere without controlling the atmosphere, and therefore, the reduction of the precursor of a noble metal occurs together with the reduction of oxygen dissolved in the dispersion medium (for example, water) in which the photocatalyst particles are dispersed. Accordingly, there has been required a method of producing a noble metal-supported photocatalyst particles which can support the noble metal with high efficiency and also show high activity in view of industrialization.

### SUMMARY OF THE INVENTION

Thus, an object of the present invention is to provide a method capable of producing noble metal-supported photocatalyst particles showing high photocatalytic activity.

The present inventors have intensively studied so as to achieve the above object. As a result, they have found that noble metal-supported photocatalyst particles showing high photocatalytic activity can be obtained by carrying out light irradiation after blowing an inert gas into a dispersion of photocatalyst particles in a step of supporting the noble metal on the photocatalyst particles, and thus the present invention has been completed.

Therefore, the present invention provides a method for producing noble metal-supported photocatalyst particles wherein a noble metal is supported on a surface of photocatalyst particles, the method comprising steps of: blowing an inert gas into a raw dispersion in which the photocatalyst particles are dispersed and a precursor of the noble metal is dissolved in a dispersion medium; and irradiating the raw dispersion with light having energy larger than that of a bandgap of the photocatalyst particles, thereby supporting the noble metal on the surface of the photocatalyst particles.

Also, the present invention provides a method for producing a dispersion of noble metal-supported photocatalyst particles wherein a noble metal is supported on a surface of the photocatalyst particles and the noble metal-supported photocatalyst particles are dispersed in a dispersion medium, the method comprising successive steps of: blowing an inert gas into a raw dispersion in which the photocatalyst particles are dispersed and a precursor of the noble metal is dissolved in the dispersion medium; and irradiating the raw dispersion with light having energy larger than that of a bandgap of the photocatalyst particles, thereby supporting the noble metal on the surface of the photocatalyst particles.

According to the present invention, the amount of oxygen dissolved in the raw dispersion is reduced by the blowing of the inert gas into the raw dispersion, and therefore, the photoelectrodeposition method which reduces a precursor of a noble metal to a noble metal can be carried out efficiently by the irradiation with light having energy larger than that of a bandgap of photocatalyst particles, and thus noble metal-supported photocatalyst particles showing high photocatalytic activity can be produced.

### DETAILED DESCRIPTION OF THE INVENTION

### <Photocatalyst>

The photocatalyst is, for example, a semiconductor developing a photocatalytic activity by irradiation with ultraviolet light or visible light, and specific examples thereof include compounds of metal elements with oxygen, nitrogen, sulfur and/or fluorine showing a particular crystal structure. Examples of the metal element include Ti, Zr, Hf, V, Nb, Ta, Cr, Mo, W, Mn, Tc, Re, Fe, Co, Ni, Ru, Rh, Pd, Os, Ir, Pt, Cu, Ag, Au, Zn, Cd, Ga, In, Tl, Ge, Sn, Pb, Bi, La, Ce. Examples of the compound include one or more oxides, nitrides, sulfides, oxynitrides, oxysulfides, nitrogen fluorides, oxyfluorides, nitrogen oxyfluorides of the above metals. Among them, oxides of Ti, W, or Nb are preferred, and metatitanic acid, titanium oxide, tungsten oxide, etc. are particularly preferred. The photocatalyst may be used alone, or two or more kinds of them may be used in combination.

### <Metatitanic acid>

Metatitanic acid (H₂ TiO₃ , TiO(OH)₂, β-titanium hydroxide) can be obtained, for example, by hydrolyzing an aqueous solution of titanyl sulfate through heating. The particle diameter of metatitanic acid is not particularly limited and is usually from 20 to 150 nm, and preferably from 40 to 100 nm, in terms of an average dispersed particle diameter in view of the photocatalytic activity. The BET specific surface area of the metatitanic acid is not particularly limited and is usually from 100 to 500 m²/g, and preferably from 300 to 400 m²/g, in view of the photocatalytic activity.

### <Titanium oxide>

When the photocatalyst is titanium oxide, titanic compounds such as titanium trichloride, titanium tetrachloride, titanium sulfate, titanium oxysulfate, titanium oxychloride or titanium tetraisopropoxide may be used as a precursor compound of the photocatalyst.
Titanium oxide (TiO₂) can be obtained, for example, by (i) a method wherein a base is added to an aqueous solution of titanyl sulfate or titanium chloride without heating the solution to obtain a precipitate which is then calcined, (ii) a method wherein water, an acidic aqueous solution or a basic aqueous solution is added to titanium alkoxide to obtain a precipitate which is then calcined, or (iii) a method wherein metatitanic acid is calcined. The titanium oxide obtained by these methods may have a desired crystal form (crystal structure) such as an anatase, brookite, or rutile type by adjusting the calcination temperature and/or the calcination time in a calcination step.
It is possible to use, in addition to the above titanium oxide, titanium oxides described in JP2001-72419 A, JP2001-190953 A, JP2001-316116 A, JP2001-322816 A, JP2002-29749 A, JP2002-97019 A, WO01/10552, JP2001-212457 A, JP2002-239395 A, WO03/080244, WO02/053501, JP2007-69093 A, Chemistry Letters, Vol. 32, No. 2, pp.196-197 (2003), Chemistry Letters, Vol. 32, No. 4, pp.364-365 (2003), Chemistry Letters, Vol. 32, No. 8, pp.772-773 (2003), and Chem. Mater., 17, pp.1548-1552(2005). Also, titanium oxide can be obtained by the methods described in JP2001-278625 A, JP2001-278626 A, JP2001-278627 A, JP2001-302241 A, JP2001-335321 A, JP2001-354422 A, JP2002-29750 A, JP2002-47012 A, JP2002-60221 A, JP2002-193618 A, and JP2002-249319 A.
The particle diameter of titanium oxide is not particularly limited and is usually from 20 to 150 nm, and preferably from 40 to 100 nm, in terms of an average dispersed particle diameter in view of the photocatalytic activity. The BET specific surface area of the titanium oxide is not particularly limited and is usually from 100 to 500 m²/g, and preferably from 300 to 400 m²/g, in view of the photocatalytic activity.

### <Tungsten oxide>

When the photocatalyst is tungsten oxide, tungstenic compounds such as ammonium metatungstate, ammonium paratungstate, tungstic acid (H₂ WO₄), tungsten chloride or tungsten alkoxide may be used as a precursor compound of the photocatalyst.
Examples of the tungsten oxide particles usually include tungsten trioxide (WO₃) particles. The tungsten trioxide particles can be obtained, for example, by a method wherein an acid is added to an aqueous solution of a tungstate salt such as calcium tungstate (CaWO₄), sodium tungstate (Na₂ WO₄) or potassium tungstate (K₂ WO₄) to obtain tungstic acid (H₂ WO₄) as a precipitate, and the resulting tungstic acid is then calcined. Also, they can be obtained by a pyrolytic method, for example, by heating ammonium metatungstate or ammonium paratungstate. Tungsten oxide is preferably used as a photocatalyst because it shows high photocatalytic activity under irradiation of visible light.
The particle diameter of tungsten oxide particles used in the present invention is usually from 50 nm to 200 nm, and preferably from 80 nm to 130 nm, in terms of an average dispersed particle diameter in view of the photocatalytic activity. The BET specific surface area of the tungsten oxide particles is usually from 4 m²/g to 100 m²/g, and preferably from 15 m²/g to 50 m²/g, in view of the photocatalytic activity.

### <Production of photocatalyst>

In the method for producing a photocatalyst used in the present invention, organic particles having a particle diameter of 50 nm to 200 nm may be mixed with a precursor compound of a photocatalyst to obtain a photocatalyst having a high specific surface area. For example, polymethyl metacrylates, polycarbonates, polystyrenes, polyesters, polyimides, epoxy resins or crushed walnut may be used as the organic particles. Among them, polymethyl metacrylates are preferably used.

Such a mixture can be obtained, for example, by a method wherein a solution of a precursor compound of a photocatalyst dissolved in a solvent is brought in contact with organic particles to impregnate the precursor compound into the organic particles, and the solvent is then distilled off. A particulate precursor compound of a photocatalyst may be mixed with organic particles in a powdery state. It is also possible to disperse a precursor compound of a photocatalyst and organic particles in a solvent and then to distill off the solvent.

The organic particles may be used in a dried state, or in a colloidal state wetted with moisture to some extent. Also, a mixture before calcining may be dried at a temperature from room temperature to 200°C.

The solvent used for dispersing or dissolving a precursor compound of a photocatalyst is not particularly limited as long as it can disperse or dissolve the precursor compound and does not dissolve the above organic particles. It is preferable to use water or alcohols such as methanol, ethanol or propanol.

Next, the above mixture is calcined to dissipate the organic particles. Usually, the calcination can be carried out using a calcination apparatus such as an air current calcination furnace, tunnel furnace or rotating furnace. The calcination temperature may be appropriately set in a range of usually 350°C or higher, preferably 380°C or higher to usually 750°C or lower, preferably 650°C or lower. Also, the calcination time may appropriately set depending on the calcination temperature, the type of the calcination apparatus, etc. The calcination time is usually 10 minutes or more, preferably 30 minutes or more, and usually 30 hours or less, preferably 10 hours or less. The calcination is carried out in an atmosphere containing a sufficient amount of oxygen to dissipate the organic particles.

The resulting photocatalyst may be subjected to a grinding treatment. The grinding treatment may be carried out before or after calcination. Here, the grinding treatment may be a dry grinding wherein the grinding is carried out in a dried state without adding a liquid such as water, or a wet grinding wherein the grinding is carried out in a wetted state with adding a liquid such as water. For grinding by the dry grinding, for example, grinding apparatuses such as a ball mill including a tumbling mill, a vibration ball mill, a planetary mill, a high-speed rotating grinder including a pin mill, a medium stirring mill, a jet mill may be used. For grinding by the wet grinding, for example, the above described grinding apparatuses such as a ball mill, a high-speed rotating grinder or a medium stirring mill may be used.

### <Dispersion of photocatalyst particles>

The dispersion of photocatalyst particles according to the present invention is a dispersion wherein the above photocatalyst is dispersed in a dispersion medium.

### <Precursor of noble metal>

A precursor which can dissolve in a dispersion medium is used as the precursor of a noble metal used in the present invention. When such a precursor is dissolved in a medium, a noble metal element constituting the precursor usually becomes a positively-charged noble metal ion which is present in the dispersion medium. Then, the noble metal ion is reduced to a zero-valent noble metal with irradiation of light, and the noble metal is supported on the surface of photocatalyst particles. Examples of the noble metal include Cu, Pt, Au, Pd, Ag, Ru, Ir and Rh. Examples of the precursor of the noble metal include hydroxides, nitrates, sulfates, halides, organic acid salts, carbonates, phosphates of the above noble metals. Among them, the noble metal is preferably Cu, Pt, Au or Pd in view of obtaining high photocatalytic activity.

Examples of the precursor of Cu include copper nitrate (Cu(NO₃)₂), copper sulfate (CuSO₄), copper chloride (CuCl₂, CuCl), copper bromide (CuBr₂, CuBr), copper iodide (CuI), copper iodate (CuI₂ O₆), ammonium copper chloride (Cu(NH₄ )₂ Cl₄), copper oxychloride (Cu₂ Cl(OH)₃), copper acetate (CH₃ COOCu, (CH₃ COO)₂ Cu), copper formate ((HCOO)₂ Cu), copper carbonate (CuCO₃), copper oxalate (CuC₂O₄), copper citrate (Cu₂ C₆ H₄ O₇) and copper phosphate (CuPO₄).

Examples of the precursor of Pt include platinum chloride (PtCl₂ , PtCl₄ ), platinum bromide (PtBr₂ , PtBr₄ ), platinum iodide (PtI₂, PtI₄ ), potassium chloroplatinate (K₂ (PtCl₄ )), hexachloroplatinic acid (H₂ PtCl₆), platinum sulfite (H₃ Pt(SO₃ )₂ OH), tetraammine platinum chloride (Pt(NH₃ )₄ Cl₂ ), tetraammine platinum hydrogencarbonate (C₂ H₁₄ N₄ O₆ Pt), tetraammine platinum hydrogenphosphate (Pt(NH₃ )₄ HPO₄ ), tetraammine platinum hydroxide (Pt(NH₃ )₄ (OH)₂ ), tetraammine platinum nitrate (Pt(NO₃)₂ (NH₃ )₄ ), tetraammine platinum tetrachloroplatinum ((Pt(NH₃ )₄ )(PtCl₄ )), and dinitrodiammine platinum (Pt(NO₂ )₂ (NH₃ )₂).

Examples of the precursor of Au include gold chloride (AuCl), gold bromide (AuBr), gold iodide (AuI), gold hydroxide (Au(OH)₂ ), tetrachloroauric acid (HAuCl₄ ), potassium tetrachloroaurate (KAuCl₄ ), and potassium tetrabromoaurate (KAuBr₄ ).

Examples of the precursor of Pd include palladium acetate ((CH₃ COO)₂ Pd), palladium chloride (PdCl₂ ), palladium bromide (PdBr₂), palladium iodide (PdI₂), palladium hydroxide (Pd(OH)₂ ), palladium nitrate (Pd(NO₃ )₂), palladium sulfate (PdSO₄ ), potassium tetrachloropalladate (K₂ (PdCl₄ )), potassium tetrabromopalladate (K₂ (PdBr₄ )), tetraammine palladium chloride (Pd(NH₃ )₄ Cl₂ ), tetraammine palladium bromide (Pd(NH₃ )₄ Bur₂ ), tetraammine palladium nitrate (Pd(NH₃ )₄ (NO₃ )₂ ), tetraammine palladium tetrachloropalladic acid ((Pd(NH₃ )₄ )(PdCl₄ )), and ammonium tetrachloropalladate ((NH₄ )₂ PdCl₄ ).

The precursor of a noble metal may be used alone, or two or more kinds of them may be used in combination. The amount of the precursor used is usually 0.005 part by mass or more in terms of a noble metal atom, in view of obtaining a sufficient improving effect of a photocatalytic activity, and usually 1 part by mass or less in view of obtaining an effect worth the cost, and preferably from 0.01 part by mass to 0.6 part by mass, relative to 100 parts by mass of photocatalyst particles used.

### <Raw dispersion>

In the present invention, a raw dispersion is used in which the above photocatalyst particles are dispersed and the above precursor of a noble metal is dissolved in a dispersion medium. For dispersing the photocatalyst particles in the dispersion medium, it is preferable to carry out a dispersion treatment with a known apparatus such as a wet medium stirring mill.

### <Dispersion medium>

Usually, an aqueous medium mainly containing water, specifically that containing 50% by mass or more of water, is used as a dispersion medium. The amount of the dispersion medium used is usually 5-fold by mass to 200 -fold by mass, relative to the photocatalyst particles. When the amount of the dispersion medium used is less than 5-fold by mass, photocatalyst particles tend to precipitate. In contrast, when the amount exceeds 200-fold by mass, it is disadvantageous in respect of a volumetric effect.

### <Sacrificial agent>

In the present invention, it is preferable to add a sacrificial agent to a raw dispersion. For example, alcohols such as ethanol, methanol or propanol, ketones such as acetone, and carboxylic acids such as oxalic acid are used as the sacrificial agent. When the sacrificial agent is a solid, the sacrificial agent may be used as it is, or after dissolving it in a suitable solvent. In addition, the sacrificial agent may be added to a raw dispersion before light irradiation. Alternatively, the sacrificial agent may be added to a raw dispersion after a certain period of time of light irradiation, and further light irradiation may be carried out thereafter. The amount of the sacrificial agent is usually 0.001-fold by mass to 0.3-fold by mass, preferably 0.005-fold by mass to 0.1-fold by mass, relative to the dispersion medium. When the amount of the sacrificial agent used is less than 0.001-fold by mass, the support of a noble metal onto photocatalyst particles is insufficient. In contrast, when the amount exceeds 0.3-fold by mass, the amount of the sacrificial agent is excessive and does not give an effect which is worth the cost.

### <Inert gas>

In the present invention, an inert gas is blown into a raw dispersion before or during light irradiation. The inert gas includes nitrogen and noble gases (helium, neon, argon, krypton, etc.). The blowing of an inert gas may be carried out after the addition of a sacrificial agent. The amount of an inert gas blown may be an amount capable of removing oxygen dissolved in a dispersion of photocatalyst particles to some extent. For example, bubbling of a gas may be carried out at 500 mL/min for 10 minutes to 24 hours relative to 30 g of a dispersion of photocatalyst particles.
The phrase "band gap of photocatalyst particles" described herein means a bandgap of a compound (photocatalyst) showing a photocatalytic activity in the photocatalyst particles. When plural kinds of photocatalysts are present, for example, due to inclusion of plural kinds of compounds (photocatalyst) showing a photocatalytic activity in one photocatalyst particle, or due to use of plural kinds of photocatalyst particles, the phrase "energy larger than that of a bandgap of photocatalyst particles" means energy larger than that of a bandgap of any one of these plural kinds of photocatalysts (i.e. energy larger than that of minimum among bandgaps of plural kinds of photocatalysts).
Also, when plural kinds of photocatalysts are present, it is preferable to use a light source capable of irradiating energy larger than that of bandgaps of these plural kinds of photocatalysts.

### <Irradiation with light>

In the present invention, a raw dispersion receiving a bubbling of an inert gas is irradiated with light. The light irradiation toward a raw dispersion may be carried out with stirring. The dispersion is allowed to pass through a transparent glass or plastic tube, and light may be irradiated from inside or outside of the tube. The procedure may be carried out repeatedly. The light source is not particularly limited as long as it can emit light having energy larger than that of a bandgap of photocatalyst particles. Specifically, a germicidal lamp, a mercury lamp, a luminescent diode (LED), a fluorescent lamp, a halogen lamp, a xenon lamp and sunlight may be used. The wavelength of light for irradiation is usually from 180 nm to 500 nm. The light irradiation time is usually 20 minutes or more, preferably 1 hour or more, and usually 24 hours or less, preferably 6 hours or less, since a sufficient amount of a noble metal can be supported. When the irradiation time exceeds 24 hours, an effect which is worth the cost of the light irradiation can not be obtained since, by that time, most precursors of a noble metal are converted to the noble metal which is supported on particles.

### <pH adj ustment>

In the present invention, it is preferable to carry out the light irradiation while keeping the pH of a raw dispersion at the pH in a range from 2.5 to 4.5, and preferably from 2.7 to 3.5. Usually, the pH of the dispersion gradually changes to an acidic pH when a noble metal is supported on the surface of photocatalyst particles by light irradiation. Accordingly, a base may usually be added to the dispersion in order to keep the pH in a range defined in the present invention. Examples of the base include aqueous solutions of ammonia, sodium hydroxide, potassium hydroxide, magnesium hydroxide, calcium hydroxide, strontium hydroxide, barium hydroxide, and lanthanum hydroxide. Among them, it is preferable to use ammonia water.

### <Noble metal-supported photocatalyst>

Thus, the light irradiation after blowing of an inert gas changes a precursor of a noble metal to the noble metal which is efficiently supported on the surface of photocatalyst particles, thereby giving the objective noble metal-supported photocatalyst particles.

### <Dispersion of noble metal-supported photocatalyst particles>

A dispersion of the above noble metal-supported photocatalyst particles can form a photocatalyst layer having a uniform film quality, for example, when applied onto a substrate as it is. Examples of the substrate include building materials such as ceiling materials, tiles, glasses, wall materials and floors; automotive interiors such as automotive instrument panels, automotive sheets and automotive ceiling materials; and textile products such as clothes and curtains.

For the purpose of improving an adhesion property, it is also possible to add inorganic and/or organic binders to the dispersion of noble metal-supported photocatalyst particles.

The dispersion of noble metal-supported photocatalyst particles may contain various known additives as long as they do not impair the effects of the present invention. Examples of additives include silicon compounds such as amorphous silica, silica sol, water glass and organopolysiloxane; aluminum compounds such as amorphous alumina, alumina sol and aluminum hydroxide; aluminosilicates such as zeolite and kaolinite; alkaline earth metal oxides such as magnesium oxide, calcium oxide, strontium oxide and barium oxide; alkaline earth metal hydroxides such as magnesium hydroxide, calcium hydroxide, strontium hydroxide and barium hydroxide; hydroxides or oxides of metal elements such as Ti, Zr, Hf, V, Nb, Ta, Cr, Mo, W, Mn, Tc, Re, Fe, Co, Ni, Ru, Rh, Os, Ir, Ag, Zn, Cd, Ga, In, Tl, Ge, Sn, Pb, Bi, La, and Ce; calcium phosphate, molecular sieves, activated charcoal, polyaddition products of organic polysiloxane compounds, phosphates, fluorine polymers, silicon polymers, acrylic resins, polyester resins, melamine resins, urethane resins and alkyd resins. When these additives are used, they may be used alone, or two or more kinds of them may be used in combination.
When a photocatalyst layer, which is formed by applying a dispersion of noble metal-supported photocatalyst particles according to the present invention to a substrate, is irradiated with light, it becomes possible to reduce the concentration of volatile organic substances such as formaldehyde or acetaldehyde, malodorous substances such as aldehydes, mercaptans or ammonia, and nitrogen oxides, and also to decompose and remove, for example, Staphylococcus aureus and Escherichia coli.

### EXAMPLES

The present invention will be described in more detail below by way of Examples, but the present invention is not limited thereto.
Analysis and evaluation of photocatalysts obtained in Examples and Comparative Examples were carried out using the following procedures.

### (Crystalline phase (crystal structure))

The measurement was conducted using an X-ray diffraction apparatus ("Rigaku RINT ULTIMA", manufactured by Rigaku Corporation).

### (BET specific surface area)

The measurement was conducted by a nitrogen adsorption method using a high speed/specific surface area/micropore distribution measuring apparatus ("NOVA 1200e", manufactured by Yuasa Ionics Co., Ltd.).

### (Photocatalytic activity: degradation of acetic acid)

Photocatalytic activity was evaluated by carrying out a degradation reaction of acetic acid utilizing a photocatalytic activity under visible light irradiation, and measuring an evolution rate of carbon dioxide which is a completely degraded product of acetic acid. Specifically, a photocatalyst sample (50 mg) was spread on one surface of a glass slide to a square shape (measuring 15 mm x 15 mm), and the slide was put on the bottom of a Pyrex^{®} glass vessel having an inner volume of 330 mL. From upside, light containing both ultraviolet light and visible light was irradiated for 30 minutes using a xenon lamp (manufactured by Cermax: 300 W) to remove organic substances remaining on the surface of the photocatalyst sample. The glass vessel was then sealed, about 22 µmol of acetic acid was introduced into the vessel using a syringe, and the vessel was allowed to stand for 20 minutes in the dark. Then, visible light was irradiated using a xenon lamp mounted with an ultraviolet light cut filter ("L-42", manufactured by AGC Techno Glass Co., Ltd.) as a light source, during which a portion of gas in the vessel was sampled at intervals of 4 minutes from the onset of the light irradiation, and the amount of carbon dioxide was measured using a gas chromatograph ("Agilent 3000 micro GC", manufactured by Agilent Technologies, Inc.). The light irradiation times were plotted along the horizontal axis, and the amounts of carbon dioxide along the vertical axis. From the resulting graph, the amount of carbon dioxide at the point of the light irradiation for 20 minutes was read and, on the basis of the value, the amount of carbon dioxide evolution per hour was calculated. The calculated value serves as the evolution rate of carbon dioxide.

### (Photocatalytic activity: degradation of acetaldehyde)

The photocatalytic activity was evaluated by measuring a first-order reaction rate constant in a degradation reaction of acetaldehyde under light irradiation using a fluorescent lamp.
First, a sample for measuring a photocatalytic activity was prepared. Thus, the resulting dispersion of photocatalyst particles was added dropwise to a glass schale (measuring 70 mm in outer diameter, 66 mm in inner diameter, 14 mm in height, and 48 mL in volume) so that the amount added dropwise becomes 1 g/m² in terms of solid content per unit area of the bottom face, and the dispersion was spread so that it is uniformly distributed on the whole bottom face of the schale. Subsequently, the schale was dried by retaining it in a drier at 110°C for 1 hour under an ambient atmosphere, to form a photocatalyst layer on the bottom face of the glass schale. The photocatalyst layer was irradiated with ultraviolet light from a black light for 16 hours so that the intensity of the ultraviolet light becomes 2 mW/cm² (measured using an ultraviolet light intensity meter "UVR-2" (manufactured by Topcon Corporation) equipped with light receiving section "UD-36" (manufactured by the same company)). The resulting schale was used as a sample for measuring a photocatalytic activity.

Subsequently, the sample for measuring a photocatalytic activity (whole schale) was placed into a gas bag (inner volume 1 L) and the bag was sealed. A vacuum was applied to the gas bag, and a mixed gas (0.6 L) having a volume ratio of oxygen to nitrogen of 1:4 was then introduced into the bag. Furthermore, a nitrogen gas (3 mL) containing 1% by volume of acetaldehyde therein was introduced, and the bag was retained at room temperature for 1 hour in the dark. Subsequently, light of a fluorescent lamp was irradiated from outside of the gas bag using a commercially available white fluorescent lamp as a light source so that the illumination intensity near the sample for measurement becomes 1000 lux (measured using illuminometer "T-10", manufactured by Minolta Corporation). The degradation reaction of acetaldehyde was carried out in this manner. At that time, the intensity of ultraviolet light near the sample for measurement was 6.5 µW/cm² (measured using an ultraviolet light intensity meter "UVR-2" (manufactured by Topcon Corporation) equipped with light receiving section "UD-36" (manufactured by the same company)). A gas in the gas bag was sampled at intervals of 1.5 hours from the onset of the irradiation with light of the fluorescent lamp, and the concentration of acetaldehyde was measured using a gas chromatograph ("GC-14A", manufactured by Shimadzu Corporation). Then, a first-order reaction rate constant was calculated from the concentration of acetaldehyde relative to the irradiation time, and the calculated value was evaluated as a degradation activity of acetaldehyde. It can be said that the greater the first-order reaction rate constant, the higher the degradation activity of acetaldehyde (i.e. photocatalytic activity).

### (Production Example 1: Synthesis of polymethyl metacrylate particles)

In a 5 L of a glass reaction vessel, 250 parts by mass of water, 1.5 parts by mass of sodium carbonate, 4.7 parts by mass of an aqueous solution of sodium dodecylbenzenesulfonate having a concentration of 15% by mass, and 0.06 part by mass of sodium peroxodisulfate were charged. Then, 61.5 parts by mass of methyl metacrylate was continuously added at 80°C over 60 minutes with stirring under a nitrogen atmosphere, and the mixture was further matured at the same temperature for 60 minutes with stirring. Subsequently, an aqueous solution consisting of 12 parts by mass of water and 0.06 part by mass of sodium peroxodisulfate was added, followed by stirring. Then, 61.5 parts by mass of methyl metacrylate was continuously added at 80°C over 60 minutes with stirring, and the mixture was further matured at the same temperature for 60 minutes with stirring to obtain a polymeric latex. A solid content of this latex was 31 % by mass. Subsequently, the resulting polymer latex was frozen in a freezer at -20°C for 24 hours and then thawed to aggregate the polymer particles. The resulting aggregated slurry was dehydrated for 10 minutes using a centrifuge under a condition of 1500 rpm (470 G), and the resulting wet cake of the polymer was dried at 80°C for 24 hours in a vacuum drier to obtain spherical polymethyl metacrylate particles.
The particle diameter of the resulting polymethyl metacrylate particles was measured by a dynamic scattering method using a light scattering photometer ("DLS-7000", manufactured by Otsuka Electronics Co., Ltd.). The average particle diameter was 145 nm.

### (Example 1)

To an aqueous solution (8 mL) of ammonium metatungstate having a concentration of 50% by mass in terms of WO₃ ("MW-2", manufactured by Nippon Inorganic Colour & Chemical Co., Ltd; specific gravity: 1.8 g/mL), methanol (4.4 mL) was added, followed by slight stirring using a spatula. To the solution, the polymethyl metacrylate particles (6 g) obtained in Production Example 1 were added and mixed. Subsequently, the resulting mixture was allowed to stand at room temperature for 3 hours, solid-liquid separation was then carried out by suction filtration, and the resulting solid was transferred to a schale and dried naturally by placing the schale in a draft. The resulting solid (2 g) after drying was heated to 420°C in a calcining furnace at 5°C/min and calcined in air at 420°C for 5 hours to obtain particulate tungsten oxide particles (bandgap: 2.4 to 2.8 eV). BET specific surface area was 23 m²/g.

The resulting tungsten oxide particles (0.5 g) were dispersed in water (50 mL), and an aqueous solution of hexachloroplatinic acid (H₂ PtCl₆) having a concentration of 0.019 mol/L was added to the dispersion so that Pt is present in 0.03 part by mass relative to 100 parts by mass of the tungsten oxide particles. An argon gas was blown into the dispersion for 30 minutes, and light irradiation was then carried out for 1 hour under a sealed condition. As a light source, twenty-eight (28) of purple luminescent diodes (OptoSupply, 5 mm Super Violet LED OSSV5111A, 45 mW/sr, 400 nm (3.1 eV)) were used. Subsequently, methanol (5 mL) was added to the above dispersion of the tungsten oxide particles and an argon gas was again blown for 1 hour, and then light irradiation was carried out for 1 hour with stirring as described above. Then, filtration, washing with water, and drying at 120°C were carried out to obtain Pt-supported tungsten oxide particles.

Evaluation of the photocatalytic activity of the Pt-supported tungsten oxide particles revealed that the evolution rate of carbon dioxide in the degradation reaction of acetic acid under visible light irradiation is 12.0 µmol/h.

### (Example 2)

Pt-supported tungsten oxide particles were obtained in the same manner as in Example 1, except that the aqueous solution of hexachloroplatinic acid (H₂ PtCl₆) having a concentration of 0.019 mol/L was added to the dispersion so that Pt was present in 0.06 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 22.0 µmol/h.

### (Example 3)

Pt-supported tungsten oxide particles were obtained in the same manner as in Example 1, except that the aqueous solution of hexachloroplatinic acid (H₂ PtCl₆ ) having a concentration of 0.019 mol/L was added to the dispersion so that Pt is present in 0.1 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 32.9 µmol/h.

### (Example 4)

Pt-supported tungsten oxide particles were obtained in the same manner as in Example 1, except that the aqueous solution of hexachloroplatinic acid (H₂ PtCl₆) having a concentration of 0.019 mol/L was added to the dispersion so that Pt is present in 0.2 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 60.0 µmol/h.

### (Example 5)

Pt-supported tungsten oxide particles were obtained in the same manner as in Example 1, except that the aqueous solution of hexachloroplatinic acid (H₂ PtCl₆ ) having a concentration of 0.019 mol/L was added to the dispersion so that Pt is present in 0.3 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 63.6 µmol/h.

### (Example 6)

Pt-supported tungsten oxide particles were obtained in the same manner as in Example 1, except that the aqueous solution of hexachloroplatinic acid (H₂ PtCl₆ ) having a concentration of 0.019 mol/L was added to the dispersion so that Pt is present in 0.5 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 63.9 µmol/h.

### (Example 7)

Pt-supported tungsten oxide particles were obtained in the same manner as in Example 1, except that the aqueous solution of hexachloroplatinic acid (H₂ PtCl₆ ) having a concentration of 0.019 mol/L was added to the dispersion so that Pt is present in 0.7 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 58.0 µmol/h.

### (Example 8)

Pt-supported tungsten oxide particles were obtained in the same manner as in Example 1, except that the aqueous solution of hexachloroplatinic acid (H₂ PtCl₆ ) having a concentration of 0.019 mol/L was added to the dispersion so that Pt is present in 1.0 part by mass relative to 100 parts by mass of the tungsten oxide particles. Evaluation of the photocatalytic activity of the Pt-supported tungsten oxide particles revealed that the evolution rate of carbon dioxide in the degradation reaction of acetic acid under visible light irradiation is 50.3 µmol/h.

### (Comparative Example 1)

Tungsten oxide particles were obtained in the same manner as in Example 1 without adding the aqueous solution of hexachloroplatinic acid (H₂ PtCl₆ ) (without supporting Pt). Evaluation of the photocatalytic activity of the tungsten oxide particles revealed that the evolution rate of carbon dioxide in the degradation reaction of acetic acid under visible light irradiation is 5.73 µmol/h.

### (Comparative Example 2)

Pt-supported tungsten oxide particles were obtained in the same manner as in Example 1, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 6.44 µmol/h.

### (Comparative Example 3)

Pt-supported tungsten oxide particles were obtained in the same manner as in Example 2, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 12.8 µmol/h.

### (Comparative Example 4)

Pt-supported tungsten oxide particles were obtained in the same manner as in Example 3, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 12.4 µmol/h.

### (Comparative Example 5)

Pt-supported tungsten oxide particles were obtained in the same manner as in Example 4, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 31.0 µmol/h.

### (Comparative Example 6)

Pt-supported tungsten oxide particles were obtained in the same manner as in Example 5, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 55.4 µmol/h.

### (Comparative Example 7)

Pt-supported tungsten oxide particles were obtained in the same manner as in Example 6, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 60.8 µmol/h.

### (Comparative Example 8)

Pt-supported tungsten oxide particles were obtained in the same manner as in Example 7, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 52.2 µmol/h.

### (Comparative Example 9)

Pt-supported tungsten oxide particles were obtained in the same manner as in Example 8, except that the blowing of an argon gas was omitted. Evaluation of the photocatalytic activity of the Pt-supported tungsten oxide particles revealed that the evolution rate of carbon dioxide in the degradation reaction of acetic acid under visible light irradiation is 48.7 µmol/h.

### (Production Example 2: Preparation of dispersion of tungsten oxide particles)

A particulate tungsten oxide powder (manufactured by Nippon Inorganic Colour & Chemical Co., Ltd.) (1 kg) was added to and mixed with ion-exchange water (4 kg) to obtain a mixture. The mixture was subjected to a dispersion treatment using a medium stirring disperser ("Ultra Apex Mill UAM-1", manufactured by Kotobuki Industries Co., Ltd.) under the following conditions to obtain a dispersion of tungsten oxide particles.
Dispersion medium: 1.85 kg of zirconia beads having a diameter of 0.05 mm
Stirring rate: peripheral speed of 12.6 m/sec
Flow rate: 0.25 L/min
Treatment temperature: 20°C
Total treatment time: about 50 min

In the resulting dispersion of tungsten oxide particles, the average dispersed particle diameter of tungsten oxide particles was 118 nm. Also, a portion of the dispersion was dried in vacuo to obtain a solid content. The BET specific surface area of the resulting solid content was 40 m²/g. In addition, the mixture before the dispersion treatment was dried in vacuo in a similar manner to obtain a solid content, and X-ray diffraction spectra were measured for both the solid contents of the mixture before the dispersion treatment and of the dispersion after the dispersion treatment and compared with each other. As a result, it was found that the crystalline type (crystal structure) of both the solid contents is WO₃ and no change of the crystalline type is observed by the dispersion treatment. At this point, the resulting dispersion was stored at 20°C for three hours and no solid-liquid separation was observed in storage.

### (Example 9)

An aqueous solution of hexachloroplatinic acid (H₂ PtCl₆ ) was added to the dispersion of tungsten oxide particles obtained in Production Example 2 so that the hexachloroplatinic acid is present in 0.12 part by mass, in terms of platinum atom, relative to 100 parts by mass of the tungsten oxide particles used. A dispersion of the tungsten oxide particles containing hexachloroplatinic acid was obtained in this way. The solid content (amount of tungsten oxide particles) contained in 100 parts by mass of this dispersion was 10 parts by mass (concentration of the solid content was 10% by mass). The pH of this dispersion was 2.4.

The dispersion of tungsten oxide particles (29.7 g) was then transferred to 50 mL of a glass vessel (a screw tube bottle, manufactured by As One Co., Ltd.) equipped with a septum for gas chromatography on its lid. Nitrogen was blown into the dispersion with bubbling at 500 mL/min for 30 minutes, and the lid was closed with eliminating air in a section of gas phase. Subsequently, with stirring the dispersion using a stirrer, ultraviolet light (ultraviolet light intensity: about 2.8 mW/cm²; measured using ultraviolet light intensity meter "UVR-2" (manufactured by Topcon Corporation) equipped with light receiving section "UD-36" (manufactured by the same company)) was irradiated from a lateral side of the glass vessel for 1 hour with a black light. Then, methanol (0.3 g) was added to the dispersion using a syringe through the above septum for gas chromatography. Subsequently, ultraviolet light was successively irradiated for 16 hours with black light (ultraviolet light intensity: 2.82 mW) to obtain a dispersion of platinum-supported tungsten oxide particles.

Evaluation of the photocatalytic activity (degradation of acetaldehyde) of the resulting dispersion revealed that the reaction rate constant was 0.421 h⁻¹.

### (Example 10)

A dispersion of noble metal-supported photocatalyst particles was obtained in the same manner as in Example 9, except that argon was used instead of nitrogen. Evaluation of the photocatalytic activity (degradation of acetaldehyde) of the dispersion of noble metal-supported photocatalyst particles revealed that the reaction rate constant was 0.400 h⁻¹.

### (Comparative Example 10)

A dispersion of noble metal-supported photocatalyst particles was obtained in the same manner as in Example 9, except that oxygen was used instead of nitrogen. Evaluation of the photocatalytic activity (degradation of acetaldehyde) of the dispersion of noble metal-supported photocatalyst particles revealed that the reaction rate constant was 0.318 h⁻¹.

### (Comparative Example 11)

A dispersion of noble metal-supported photocatalyst particles was obtained in the same manner as in Example 9, except that the blowing of nitrogen was omitted. Evaluation of the photocatalytic activity (degradation of acetaldehyde) of the dispersion of noble metal-supported photocatalyst particles revealed that the reaction rate constant was 0.355 h⁻¹.

## Claims

1. A method for producing noble metal-supported photocatalyst particles having a noble metal supported on the surface of photocatalyst particles, comprising steps of:
- blowing an inert gas into a raw dispersion including the photocatalyst particles dispersed in a dispersion medium and a precursor of the noble metal dissolved in the dispersion medium; and
- irradiating the raw dispersion with light having energy larger than that of a bandgap of the photocatalyst particles, thereby supporting the noble metal on the surface of the photocatalyst particles.

2. The method according to claim 1, wherein the noble metal is at least one selected from a group consisting of Cu, Pt, Au, Pd, Ag, Ru, Ir and Rh.

3. The method according to claim 1 or 2, wherein the photocatalyst particles are selected from oxides, nitrides, sulfides, oxynitrides, oxysulfides, nitrogen fluorides, oxyfluorides and nitrogen oxyfluorides of Ti, Zr, Hf, V, Nb, Ta, Cr, Mo, W, Mn, Tc, Re, Fe, Co, Ni, Ru, Rh, Pd, Os, Ir, Pt, Cu, Ag, Au, Zn, Cd, Ga, In, Tl, Ge, Sn, Pb, Bi, La and Ce.

4. The method according to claim 3, wherein the photocatalyst particles are selected from oxides of Ti, W and Nb.

5. The method according to claim 4, wherein the photocatalyst particles are selected from mitatitanic acid, titanium oxide and tungsten oxide particles.

6. The method according to claim 5, wherein the photocatalyst particles are tungsten oxide particles.

7. The method according to any one of the preceding claims, wherein the inert gas is selected from nitrogen and noble gases.

8. The method according to any one of the preceding claims, wherein the dispersion medium contains 50% by mass or more of water.

9. The method according to any one of the preceding claims, wherein the precursor of the noble metal is selected from hydroxides, nitrates, sulfates, halides, organic acid salts, carbonates and phosphates of Cu, Pt, Au, Pd, Ag, Ru, Ir and Rh.

10. The method according to any one of the preceding claims, wherein the noble metal-supported photocatalyst particles are in the form of a dispersion in the dispersion medium.

11. Noble metal-supported photocatalyst particles obtainable by carrying out the method as defined in any one of claims 1 to 10.
